# EUROPEAN PATENT APPLICATION

(11) **EP 1 316 902 A1**
(43) Date of publication of application: **04.06.2003**
(21) Application number: 01947797.5
(22) Date of filing: 02.07.2001
(51) Int. Cl.: G06F 17/60

(54) **METHOD FOR MARRIAGE INFORMATION SERVICE BUSINESS**

(30) Priority: 01.07.2000 JP 2000237767
(71) Applicant: Kino, Syugo, Ichinomiya-shi, Aichi 491-0001 (JP)
(72) Inventor: Kino, Syugo, Ichinomiya-shi, Aichi 491-0001 (JP)
(74) Representative: Kuhnen & Wacker
(86) International application number: JP0105750
(87) International publication number: WO02003279

(57) **Abstract**

Behind husband-wife discords and divorces have existed such problems that men and women grow friendship, in forming human relations that may lead to their future marriages, based on appearances, looks, impressions, atmospheres, places of employment, etc., in preference to views of the world and senses of values, that they get married without adequately recognizing the human natures of the partners or without forming strong bindings based on sympathies and accords in terms of views of the world and senses of values, and that, after marriages, at least one of them finally finds behind-tolerance troubles with the partner, or they rarely have chances of forming co-operated foundations on which they can overcome troubles until such troubles occur.

To solve such problems, the present invention provides a set-up of adjusting type-related combinations that allow men and women of the same type in terms of human natures and others to meet one another, a set-up of allowing them to recognize, first of all, views of the world and senses of values, and a set-up of affording them chances of confirming their views of the world and senses of values and forming strong bindings even after they met.

## Description

The present invention relates to a method for a marriage information service business using a computer system, i.e., relates to a marriage information service business which considerably improves prior-avoidance of a husband-wife mismatching, sociality, soundness and the probability of social contribution from a conventional method, which eliminates a kind of a peculiar structure which gives rise to the conventional form and transforms to a structure which exists quite normally in the ordinary society, which provides an environment which enables a love marriage in the ordinary society while adding elements for solving conventional problems which occur in relation to the process leading to the love marriage as much as possible, to the environment thus provided.

### Background Art

It is conventionally known that appearances and looks often come first as concrete primary information given from a potential marriage partner if a man and a woman who want to marry somebody look for their partners.

For example, such primary information is given by parties, events, circles or photographs.

In addition, in relation to the marriage information service business, there exists a system called "a marriage meeting" in Japan besides ordinary encounters at parties, events, circles and the like. It is known that this is intended to make sure that a man and a woman who want to marry somebody can see each other by holding the meeting with a third party in the ordinary society put as a go-between.

In the conventional marriage information service business, it is known that a company engaged in the business plays the role of this third party in the ordinary society.

It is also known that there is a structure in which the company mediates the man and the woman until the mediation related to them from the marriage meeting, the start of seeing each other after the meeting, and to engagement ends.

It is further known that in a marriage meeting, a host from the company involved first introduces the names of the man and the woman, particularly their first names and that the man and the woman often call each other not by their family names but by the first names in the meeting which follows the introduction.

In addition, it is known that in the marriage meeting, for example, normally, specific topics are not always prepared in advance between the man and the woman.

Further, it is known that a membership system is established for the marriage information service-business and that in joining the system as a member, each member is often required to answer questions of a lot of items intended to check his or her personality and trait of character and his or her desires to a potential marriage partner in an alternative method.

There is known a system for monthly introducing, to each member, several members of the opposite sex who are judged to be suited as the marriage partner of the member through a computer or the like based on data on the respective members thus collected.

There is also known a system in which each member does a search to member data on the opposite sex based only on his or her desires and applies for a marriage meeting without going through such an introduction.

Furthermore, there is known a case where a system for holding a marriage meeting not at a public location but at private locations such as the respective homes of a man or a woman by using portable videophones.

Further, it is known that there exist friend-finding sites over cellular phones in relation to the marriage information business.

However, if a man and a woman who want to marry somebody look for marriage partner candidates at parties, events, circles or the like, and appearances and looks are provided as concrete primary information from each other, then there is a disadvantage in that they are so stick to the primary information that they do not adequately recognize mutual views of world and senses of values.

Further, in case of a marriage meeting., a man and a woman are often introduced particularly by their first names and called by the first names after the introduction. Due to this, despite the fact that the marriage meeting is a public meeting with a third party going between them, the man and the woman may be possibly under the false impression that the meeting is private, thus forming a kind of a peculiar world.

Furthermore, as for topics in the marriage meeting, specific topics are not prepared. Besides, since it is not clear whether the marriage meeting is public or private, the participants are often, disadvantageously at a loss for finding topics.

In addition, until a man and a woman are engaged, i.e., the function of the company as a go-between related to growing friendship between them becomes unnecessary, the company as the third party always mediate between the man and the woman for all matters while they see each other. This social event which the man and the woman do not often experience in the ordinary society and which is a special relationship, continuous. The marriage meeting system has such a structure that the man and the woman are not permitted to form a private relationship during that time since their association is a social event with the third party going between them.

However, since this is merely a metaphysical structure, it is quite natural and unavoidable that the man and the woman do not clearly recognize this structure. Nevertheless, the fact that this system exists remains unchanged. Therefore, it is estimated that because of the recognition derived from this fact, the circumstances, in which the man and the woman always feel strange during the association, disadvantageously continue until the mediation of the company is dissolved, i.e., normally continue until they make an engagement.

Additionally, some couple who dare to have an intimate relationship, in which respect, the company involved disadvantageously finds confused.

Meanwhile, in case of a love in the ordinary society in which a man and a woman do not receive services from the marriage information service business, if they are colleagues, for example, they exchange mutual views of world and senses of values in a relationship through social matters, and support and respect each other. If they establish an intimate relationship and finally get married based on these experiences, the problems stated above do not exist.

In this case, however, quite naturally, it does not necessarily mean that the couple adjust themselves so that they are akin to each other in terms of personality based on a growth history, home background and the like when they meet for the first time. Due to this, if they disaccord greatly in personality despite their strong binding with respect to the view of world and sense of values in their relationship, it takes disadvantageously much time to tune themselves to matters including personality while they are seeking a goal to marriage.

Further, if the disaccord is too excess or the difference is beyond the tolerance of either the man or the woman and the compromise is unsuccessful although it cost much time, they unavoidably do not lead to a marriage.

Namely, these factors are considered to be among the causes of a rise in the average marriage age for men and women, a decline in birth rate, and aging society.

If there exists a competitor of the same sex in the company where the man and the woman work, their intimate relationship may sometimes adversely influence in-company human relation. If individual cases are accumulated, it is considered that the accumulated cases disadvantageously become one of the macroscopic factors that obstruct the development of the business, and eventually the development of the entire society and the entire economy.

In case of the friend-finding sites over cellular phones, the primary information from the other person includes many contents related to entertainment, which this system makes possible. This is because in the system, a company involved does not check all the contents and do not reject them only because they are related to entertainment. For this reason, it is relatively difficult to make the first incentive to establish a human relation with each other center around reason but the first incentive rather tends to be based on emotion. As a result, as in the case of the incentive by appearances and looks, the emotions of man and the woman form the first incentive, which may disadvantageously make it difficult to judge the partner based on reason.

The present invention has been achieved in light of the above-stated disadvantages, and it is an object of the present invention to prepare, in advance, a system for making adjustment related to encounters for a couple before they meet so that a man and a woman do not need to use so much time to be tuned to each other after they grow friendship. It is another object of the present invention to prepare a clear public environment in the first place after they meet, and to prepare a system in which items through social or intellectual contents are put between a man and a woman, they mutually learn, respect and support each other by the exchange of views of world and senses of views while the system has the man and the woman do social contribution activities cooperatively so that they look for their future partners. It is yet another object of the present invention to minimize attention to such things as appearances, looks, and atmospheres, urge a man and a woman to give attention to the view of world and sense of values of the other person as much as possible, and to support forming the foundation which enables the man and the woman to cooperate in overcoming some difficulties, which they are faced with after a marriage, by allowing them to be strongly bound together based on the mutual support, respect and the like in relation to the view of world and sense of values.

It is still another object of the present invention to lead a man and a woman so as to be able to naturally foster a course in which they cooperate with and support all people, i.e., endeavor to contribute to the society in a cooperative manner without never attacking and criticizing all people in forming a human relation.

It is still another object of the present invention to make it possible to establish a love marriage in any case.

In this specification, "an arranged marriage" and "a love marriage" are defined as follows. The former is originally defined as a marriage following an engagement after situations in which the association of a man and a woman is a public event with a third party serving as a go-between continue while they see each other. The latter is a marriage following an engagement after a man and a woman initially holds a public relationship and then an intimate relationship. Further, a marriage after a man and a woman see each other by establishing an intimate relationship without a go-between related to public matters between the man and the woman, i.e., without initially, clearly establishing a public relationship such as a party and a friend-finding site, is defined as "a love marriage by the second route" so as to distinguish it from the previously defined love marriage.

### Disclosure of the Invention

For the convenience of explanation, some terms are defined, which will first be explained. For example, a person which receives services of the marriage information service business is defined as "member". Among the members, a member who is in the process of applying for the registration of his or her own information is defined as "information registration member", and a member who is in the process of searching information on a member group of the opposite sex of such a type as to be classified as a suitable type for the type to which the member belongs, is defined as "information search member". Further, a juridical person responsible for the business is defined as "company", and a person who is involved in the specific operation of the business is defined as "business operator". In addition, a material check meeting in which a male member and a female member who applied for registration confirm that mutual materials are correct, is defined as "material check meeting" if the meeting is held in a public location such as a location in the office of the company. An activity which is done in order to consider a solution to a social issue or the like in cooperation with both the man and the woman after the material check meeting, is defined as "social contribution cooperative activity".

### 1-1: Overall configuration

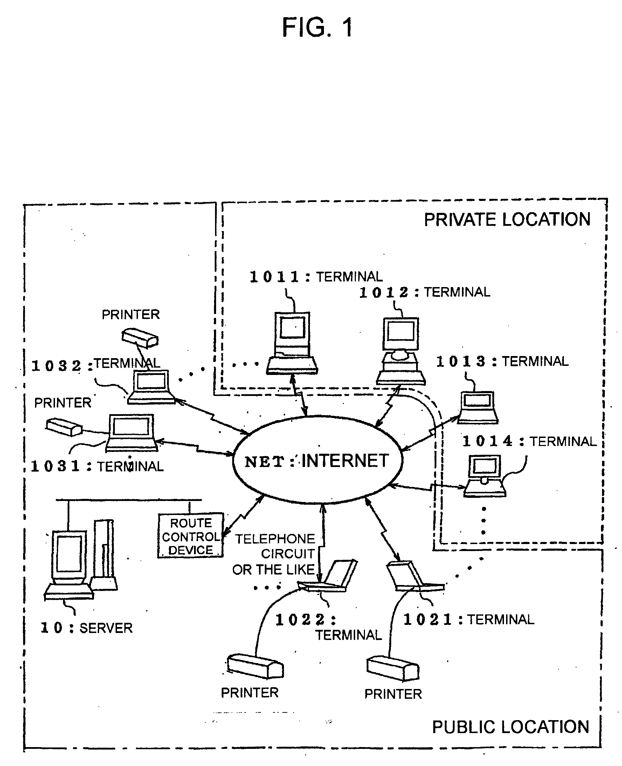

One embodiment according to the present invention will be described hereinafter with reference to the drawings. Fig. 1 is a block diagram showing the configuration of this embodiment. In Fig. 1, reference symbol 10 denotes a server, which is connected to the Internet NET by way of a route control device, a telephone circuit or one of the elements replacing them. Reference symbols 1011, 1012, 1013, 1014, ... denote various terminals in private locations such as the homes of respective members. Reference symbols 1021, 1022, ... denote various terminals in the offices of the company, i.e., public locations, particularly terminals used by male members and female members during material check meetings and social contribution cooperative activities. Reference symbols 1031, 1032, ... denote various terminals used by business operators for business operations in the offices of the company, i.e., in public locations, particularly for procedures for completing final registration of members who inputted their self information, which terminals are connected to the internet NET as in the case of the server 10. Each of the terminals includes a display section such as a CRT or LCD and an input section such as a keyboard or a mouse. It is noted that the terminals 1011, 1012, ... can be also used in public locations. However, the terminals 1031, 1032, ..., particularly terminals 1021, 1022, ... are disposed in locations limited to the public locations. Further, for the convenience of explanation, it is assumed that the terminals 1011, 1012, ... are used when the member do search, the terminals 1021, 1022, ... are used by the members in the company offices, i.e., public locations for material check meetings or social contribution cooperative activities, and that the terminals 1031, 1032, ... are used by the business operators in the offices of the company, i.e., public locations for business operations.

### 1-2: Configuration of server

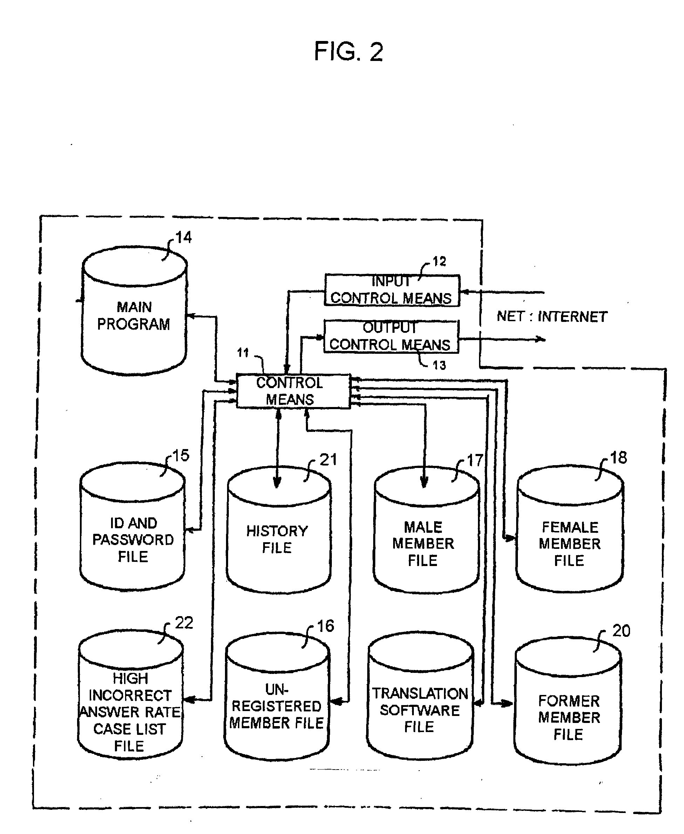

Next, the detailed configuration of the server 10 will be described. Fig. 2 is a block diagram showing the configuration of the server 10. In Fig. 2, reference symbol 11 denotes a control means, which consists of a CPU and the like and which is used for control over the respective elements, data transfer, various arithmetic operations, the temporary storage of data, and the like. Reference symbol 12 denotes an input control means, which controls data input from the terminals connected thereto through the Internet NET. Reference symbol 13 denotes an output control means, which controls data output to the terminals. Reference symbols 14 to 18 denote storage means, each of which stores the following files.

First, the storage means 14 stores main programs. The main programs are used in the control means 11, and include, for example, a program for displaying a guidance screen on the display section of each terminal, a program for displaying items of questions to input self information by each member, a program for classifying the members, a program for registering information on the members, a program for sequentially displaying sentences related to the views of world and senses of values of a member group of the opposite type of a type suited to each member who is searching, and the like. Operations by these programs will be described later.

Next, the storage means 15 stores an ID and password file. The ID and password file consists of ID's, passwords and the like managed by the company.

The storage means 16 stores an unregistered member file. This unregistered member file consists of information on the members each of who completed with procedures for information registration but who waits for alternative questions which are not created by the business operator, i.e., information on members who have not been registered in the male member file or the female member file.

The storage means 17 stores a male member file. In this embodiment, the male member file has a five-layer hierarchical structure which consists of the first layer, the second layer, the third layer, the fourth layer, and the fifth layer in this order. The first layer is a list of a set of member numbers and sentences related to views of world and senses of values for each type; the second layer is constituted by arranging the sentences related to the views of world and senses of values of the respective members in order for each type; the third layer is constituted by adding alternative questions to the sentences related to the views of world and senses of values of the respective members; the fourth layer is constituted by adding recognition as to which are correct answers to the alternative questions-added sentences related to the views of world and senses of values of the respective members; and the fifth layer consists of the other information on the respective members.

The storage means 18 stores a female member file. The female member file is equal in structure to the male member file.

The storage means 19 stores a translation software file. This translation software file is used if each of the male and female members transmits the sentences created during the social contribution cooperative activities with sentences which are translated into different languages in accordance with the countries of destinations.

The storage means 20 stores a former member file. In this embodiment, the former member file is equal in structure to the male member file and the female member file.

The storage means 21 stores a history file. In this history file, the member numbers of all the members are arranged in order. Information on a material check meeting and a social contribution cooperative activity is appropriately added to the member number of each member and the information-added numbers are stored in the storage means 21.

The storage means 22 stores a high incorrect answer rate case list file. This will be described later in detail.

### Best Mode for Carrying out the Invention

The best mode for carrying out the present invention will be described hereinafter while mentioning an embodiment and centering about the operation of this embodiment, with reference to the accompanying drawings.

### 1: Application for registration

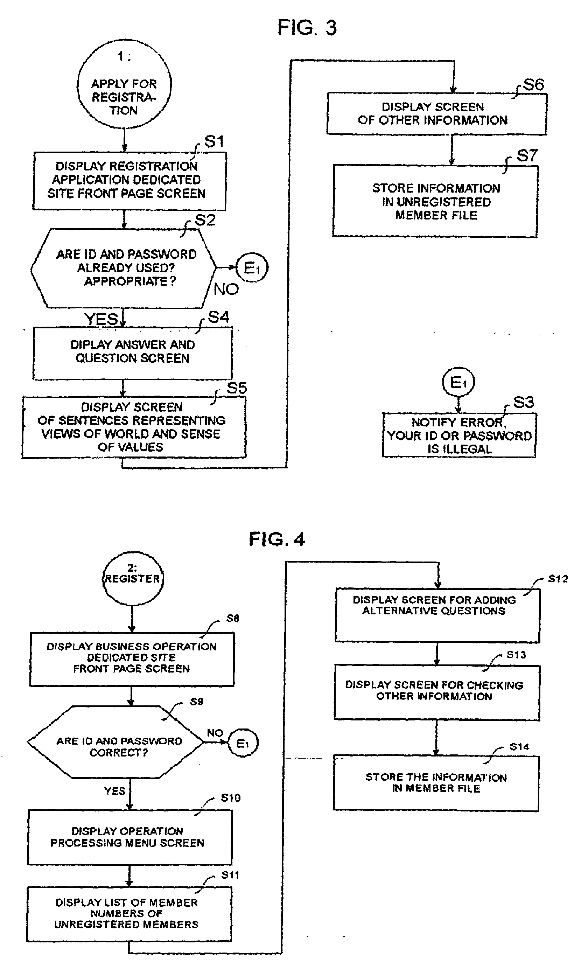

The application for registration will next be described while centering around the operations of this embodiment with reference to the drawings. Each of the terminals 1011, 1012, ... is connected to the server 10, and holds a communication with the server 10. Each terminal functions as both the terminal of a member who is being registered and that of a member who is being searched. It is assumed herein that the terminal 1011 is connected to the server 10 for the convenience of explanation. When the terminal 1011 is connected to the server 10, the control means 11 detects the connection of the terminal 1011 to the server 10 through the input control means 12, and controls the terminal 1011 in accordance with the main programs. Fig. 3 is a flow chart showing the operations of the main programs.

It is assumed herein that a terminal operator is a member who is being registered, with a view of explaining a preparation process for creating the male member file and the female member file.

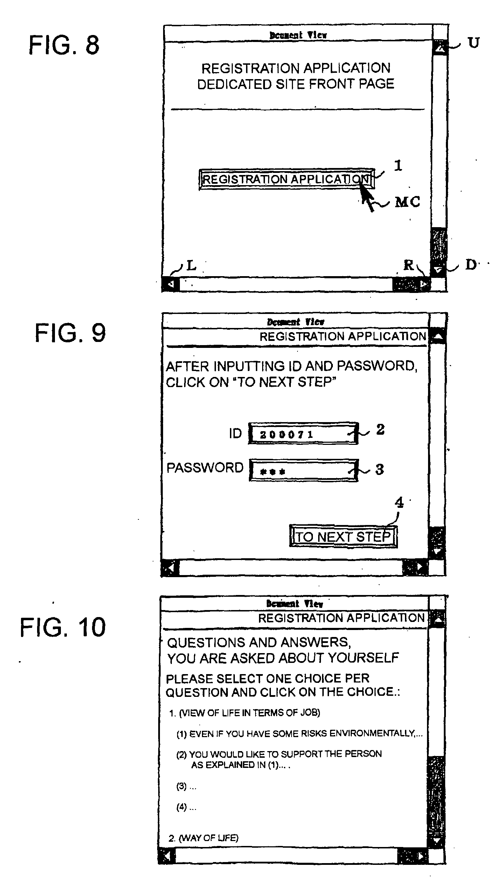

First, in a step S1 shown in Fig. 3, the control means 11 controls the display section of the terminal 1011 to display a registration application dedicated site front page screen as shown in Fig. 8, to urge the terminal operator to make "an application for registration" which is one of the processings of this embodiment. Not only this registration application dedicated site screen but also a mouse cursor MC are displayed on respective sites to be described later. By clicking on a predetermined place, the terminal operator can perform an operation among various operations. For example, by putting the mouse cursor MC on the display region of a button 1 and clicking the mouse cursor MC, a processing related to registration application is performed. By putting the mouse cursor MC on the display region of a triangular button U, D, L or R a rectangular display area defined by the apexes of the triangle is scrawled up, down, left or right, respectively.

In this embodiment, first, after putting the mouse cursor MC on the display region of the button 1 in accordance with an instruction on the screen, a terminal operator clicks the mouse cursor MC to enter a "registration application" stage. The control means 11 which detects the entry of the "registration application" stage and controls the display section of the terminal 1011 to display an ID and password input screen as shown in Fig. 9. On this screen, the terminal operator is instructed to perform operations including the input of the ID and the password. In response to the instruction, the terminal operator puts the mouse cursor MC on the display region of an input box 2 and clicks the mouse cursor MC, and then inputs an ID by the input section. Likewise, after putting the mouse cursor MC on the display region of an input box 3 and clicking the cursor MC, the terminal operator inputs a password by the input section. After completing these operations, the terminal operator puts the mouse cursor MC on the display region of a button 4 and clicks the mouse cursor MC so as to inform the server 10 of the completion of the input operations.

Through these operations, the processing moves to a step S2, in which the control means 11 checks whether or not the ID and password thus input have been used by searching the unregistered member file and the member file in order to avoid repetitive registration. Further, the control means 11 checks whether or not the ID and password are appropriate ID and password under the management of the company by searching the ID and password file. If the control means 11 determines that they have been already used, determines that they are not appropriate, or determines the both, the control means 11 moves the processing to a step S3, in which the control means 11 controls the display section of the terminal 1011 to display a notification to the effect that "your ID or password is illegal". Thereafter, returning the processing to the step S1, the control means 11 controls the display section of the terminal 1011 to display again the screen which also serves as a registration application entry, i.e., the registration application dedicated site front page screen. On the other hand, if determining that the ID and password have not been used and that they are appropriate, the terminal means 11 moves the processing to the next step S4.

In the step S4, the control means 11 controls the terminal 11 to display a question and answer screen as shown in Fig. 10, to urge the terminal operator to answer all questions by allowing the terminal operator to select an answer to each question item and to click any part from the number to sentence of a corresponding choice. In response to this, the terminal operator clicks on the respective corresponding choices. The control means 11 controls the terminal 1011 to change the color of the part from the number to the sentence of the corresponding choice to a certain different color every time the terminal operator clicks on the choice.

The terminal operator has been explained on the screen that by putting the mouse cursor MC on the part the color of which is changed and clicking the mouse cursor MC again, the color of the part is changed to-the original color and the choice returns to an original state in which the choice is not selected yet. If the terminal operator actually does so, the control means 11 performs a select cancellation processing in relation to the choice.

Further, the control means 11 controls the terminal 1011 so that the terminal operator can select only one choice per item. It is noted that this is also explained on the screen. To be specific, if the terminal operator clicks on one choice and then clicks on a different choice, the control means 11 performs a select cancellation processing to the previously clicked choice.

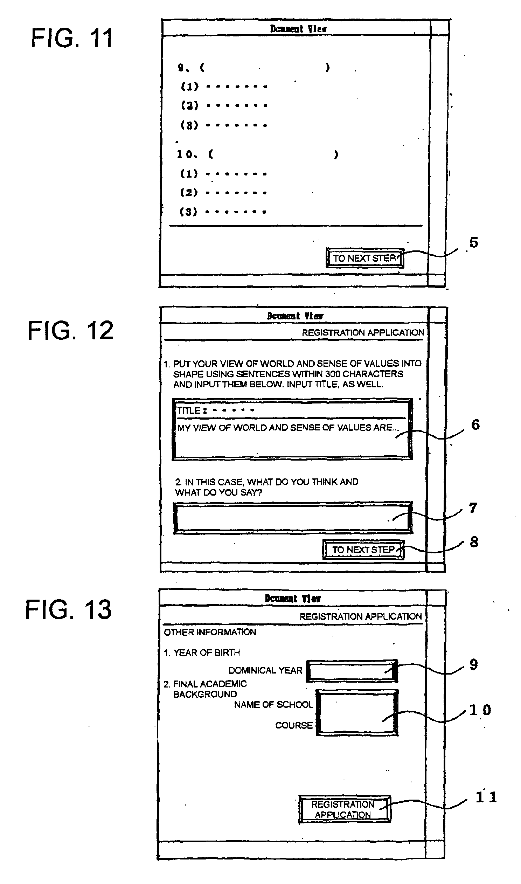

It is noted that the question and answer screens shown in Figs. 10 and 11 are separate from each other and that the first part and the last part of the continuous screen scrawled up and down by the button U or D are shown by way of example.

The following are concrete examples of the question items.

### 1. (View of life in terms of work)

(1) Even if you have some risks environmentally, you take measures to do what, you believe, should be done yourself in the society and actually do it.
(2) You would like to support the person as explained in (1) as a partner.
(3) You prefer the stabilization of livelihood to what you believe you should do.
(4) You would like to marry the person as explained in (3).

### 2. (Way of life)

(1) You try and contrive to be able to regularly live your life and do so in daily life.
(2) You try to do what is explained in (1) but do not actually do so.
(3) Even if time changes due to various circumstances, you do not mind it and your time actually changes.

### 3. (Sense of values about health)

(1) You do not smoke.
(2) You smoke.

### 4. (Putting things in order)

(1) If you use a thing, you always try to return it on the spot.
(2) If you use a thing, you return it later.
(3) If you use a thing, you leave it as it is.

### 5. (States of controlling emotion by intelligence and reason)

The terminal operator is asked the status of the member for the last one year.
(1) You have given pains to the body of a person such as striking or pinching the person with anger, broken things, shouted.
(2) Although you have not given pains to the body of a person such as striking or pinching the person, you have broken things or shouted with anger.
(3) Although you have not given pains to the body of a person such as striking or pinching the person or have not broken things, you have orally shouted with anger.
(4) Although you have not given pains to the body of a person such as striking or pinching the person, broken things or shouted, you have attacked a person with words.
(5) You feel your anger against a person or you try not to feel your anger against a person.

### 6. (Marriage experience and sexual experience)

(1) You have been married.
(2) Although you have no marriage experience but have sexual experience.
(3) You have neither marriage experience nor sexual experience.

### 7. (Final academic background)

(1) You graduated from a college of liberal arts, graduated from both a college of liberal arts and a graduate school, or left a college of liberal arts without graduating. You passed an entrance examination of a college with the subjects which include mathematics in both the primary and secondary examinations, or even if you were not set mathematical questions in the entrance examination, you confirmed that you had scholarly competence enough to pass an entrance examination of a college which sets mathematical questions in both the primary and secondary entrance examinations, from an objective index such as a trial college entrance examination.
(2) You graduated from a college of science, graduated from both a college of science and a graduate school, or left a college of science without graduating. You passed an entrance examination of a college with the subjects which include mathematics in both the primary and secondary examinations, or even if you were not set mathematical questions in both primary and secondary examinations, you confirmed that you had scholarly competence enough to pass an entrance examination of a college which sets mathematical questions in both the primary and secondary entrance examinations, from an objective index such as a trial college entrance examination.
(3) You graduated from a college of liberal arts, graduated from both a college of liberal arts and a graduate school, or left a college of liberal arts without graduating. You passed an entrance examination of a college with the subjects which include mathematics in the primary examination, or even if you were not set mathematical questions in the entrance examination, you confirmed that you had scholarly competence enough to pass an entrance examination of a certain college which sets mathematical questions in the primary entrance examination, from an objective index such as a trial college entrance examination.
(4) You graduated from a college of science, graduated from both a college of science and a graduate school, or left a college of science without graduating. You passed an entrance examination of a college with the subjects which include mathematics in the primary examination, or even if you were not set mathematical questions in the primary entrance examination, you confirmed that you had scholarly competence enough to pass an entrance examination of a certain college which sets mathematical questions in the primary entrance examination, from an objective index such as a trial college entrance examination.
(5) You graduated from a college of liberal arts, graduated from both a college of liberal arts and a graduate school, or left a college of liberal arts without graduating. You chose colleges with the subjects which do not include mathematics in the primary and secondary examinations and took entrance examinations of these colleges.
(6) You graduated from a college of science, graduated from both a college of science and a graduate school, or left a college of science without graduating. You chose colleges with the subjects which do not include mathematics in the primary and secondary examinations and took entrance examinations of these colleges.
(7) You left a college without graduating, graduated from a junior college, or graduated from a vocational school after graduating from a high school.
(8) You graduated from a high school, left a junior college without graduating, or left a vocational school without graduating after graduating from a high school.
(9) You left a high school without graduating, or left a vocational school without graduating after graduating from a junior high school.
(10) You graduated from a junior high school, or left a vocational school without graduating after graduating from a junior high school.

Here, if it is unsubtle whether the college that the answerer graduated from is a college of liberal arts or of science, the answerer graduated from both a college of liberal arts and a college of science, or the other, the answerer is sometimes uncertain to which class he or she belongs in registration. In addition, if the answerer graduated from a technical college or left a technical college without graduating, a choice is not given in the question. Although a present case of Japan is shown herein, the way of classification changes according to a time axis of age or a spatial axis of country.

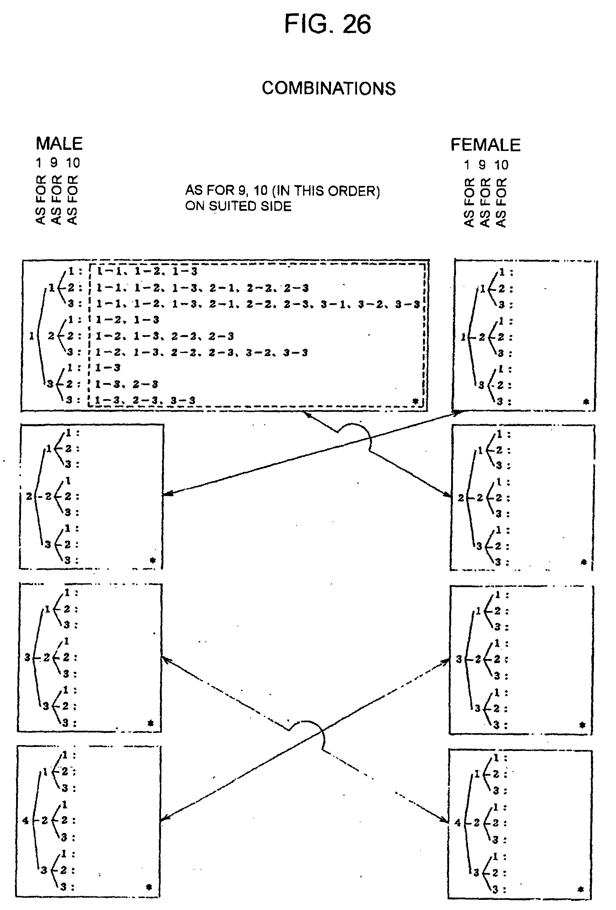

Therefore, the classification standard will be explained herein. That is, the classification is based on the viewpoints of smooth mutual understanding. The mechanism of the present invention is that the three items of Question 1 (View of life in terms of work) described above, and Questions 9 and 10 to be described later have a correspondence and that each member can search a group of the opposite sex of the type which gave the same answers to the other questions as the group of the opposite sex suited to the member in principle. Refer to Fig. 26 for how to set combinations of the three items of Questions 1, 9 and 10.

Now, it is assumed that a man and a woman get married and settle down in the future and that they have to discuss, for example, the education problem of their child or their household economy. In this case, one tries to give a painstaking explanation and lead to a conclusion by repeatedly pointing out various possible cases or doing so while exercising abstractive concepts based on, for example, the knowledge and the like which the person cultivated so far. On other hand, if the other has not gone through such exercises at the same level as that of the former for a certain period, it is highly probable that the latter feels difficulties in understanding the former and feels strained. To deal with these troubles, the present invention is characterized by classifying members and limiting the targets of each member to the group of the opposite sex of a type suited to the member in principle, thereby making it possible to search the group in order to avoid the above-stated problems. Conventionally, there has existed a method of introducing a man or a woman which may be compatible in temperament in the future to a woman or a man. However, no reasonable, logical standards have not been established as to for what reason it is determined that a man and a woman are compatible in temperature. Although the company conveyed to the members that the determination has various academic background, the members do not recognize the standard of determination by words based on sentences.

Meanwhile, in the above case, if the man and the woman are not married or bound together in- the other ways, i.e., if they relate to each other in the society, the above case does not bring about very serious problems. This is because in the society, it is significant to overcome various differences in order to enhance mutual ability.

In a home, however, it appears that a man and a woman can overcome various difficulties in the society more easily only because they feel at ease in their relationship and that they can contribute to the society with higher probability, accordingly. Namely, if the relationship in which a married couple feel at ease and the relationship in which they do not feel at ease are compared to determine which relationship can increase the rate of benefits to both oneself and the society relative to benefits to the entire society, the conclusion naturally arises.

Needless to say, if a person is so excellent in emotional functions and can continue to make adjustments for the situations, no troubles occur. The present invention is at the position that if the above-stated problem is an ordinary problem which the majority of people could be confronted with and there is a fear of the occurrence of such a trouble, measures should be actively taken to prevent the occurrence of the trouble.

That is, in the relationship which is seen to be accompanied by difficult situations, such a conclusion is considered to be reached that it is desirable to seek higher level not in the home but outside of the home in accordance with the desires of each person.

If the above-stated risk occurs, it suffices that a man and a woman try to relax the probability of the occurrence of the trouble after sufficiently understanding the above-stated structure.

It is the most serious problem that it is unclear why a trouble occurred and measures are not at all taken because of the unclearness.

The standard of classification according to the present invention is set based on the above-stated conclusion. The standard of classification is presented to the terminal operator in a part just before the questions on the question and answer screen.

As for the content thereof, a summary grasp check question is prepared right after this presentation so as not to skip it and to lessen the probability of skipping. On the screen, the terminal operator is urged to select a summary in an alternative manner. In this case, if the terminal operator gives an incorrect answer, the processing is not interrupted differently from cases to be described later. However, unless the terminal operator selects a right choice and clicks on it, the terminal operator is supposed to be unable to complete registration application in the end.

If the terminal operator desires a group of the opposite sex of a different type, the desire may sometimes be fulfilled. In this case, however, in view of potential risks, the terminal operator is introduced to understand the standard through the content and the summary grasp check question which follows. Based on this, a different type display mark which displays that the person is in a group of a different type and which is annexed to the sentences of the view of world and sense of values during search so that the other person can recognize the situation in advance. The control means 11 controls the terminal to display the status of answers to questions of the member by clicking on the mark. In this case, since the member sufficiently understands the risk of the occurrence of troubles in advance, it is clearly known how to deal with the troubles. It is considered that the most serious matter is that, as already described, a situation of grouping in the dark continues as to how a trouble occurs and the situation continues without taking any measures.

### 8. (Occupation)

The terminal operator is asked about his or her present job.

If the terminal operator is a woman and helps with the domestic chores but she have worked before, she is urged to select a job which she had most experience of.

The classification of jobs is set in light of the fact that where the standard of values is often put or centered around with reference to the main job which the operator was involved.

In short, the classification is intended to try to establish a combination of a man and a woman who can understand each other as much as possible after a marriage.

In other words, it is natural that there is little possibility that there is a person who perfectly matches the operator. In these situations, compared with a case where the company does not try to provide a combination of a man and a woman which have smaller difference as marriage partners as much as possible in advance, a case where the company tries one's best to provide a combination of a man and a woman which have smaller difference as marriage partners as much as possible in advance can relatively prevent the occurrence of troubles resulting from the difference in understanding between the man and the woman after a marriage. The classification of jobs is derived from this conclusion.

Concrete examples of jobs will be mentioned below in no special order.
(1) engaged in agriculture; (2) engaged in forestry; (3) engaged in fishery; (4) employee engaged in manufacturing management, or machine repairperson; (5) employee engaged in personnel management; (6) employee engaged in accounting; (7) system engineer; (8) employee engaged in planning; (9) employee engaged in fixed item processing; (10) sales clerk; (11) employee engaged in business; (12) detective; (13) craftsman of arbitrary type; (14) cook; (15) engaged in customer service of arbitrary type; (16) engaged in transport or operation of arbitrary type; (17) company manager or having experience of the secretary of company manager; (18) company executive or having experience of the secretary of company executive; (19) engaged in one-man business; (20) civil servant or employee of public-service corporation; (21) policeman or self-defense official; (22) politician or secretary of politician; (23) lawyer; (24) patent attorney; (25) judicial scrivener; (26) certified accountant or tax therapist; (27) administrative scrivener; (28) certified social insurance labor consultant; (29) registered architect or registered surveyor; (30) social science researcher; (31) natural science researcher; (32) human science researcher; (33) medical doctor, nurse or nutrition technician; (34) engineer engaged in health, cosmetology, hairdresser, care; (35) engaged in sports; (36) singer, composer or songwriter; (37) Japanese chess master; (38) musical performer; (39) artist; (40) designer of arbitrary genre or fashion model; (41) entertainer or actor; (42) announcer; (43) engaged in religion; (44) writer; (45) essayist, critic or newsperson of arbitrary genre; (46) certified clinical psychologist or counselor; (47) elementary school teacher; (48) junior high school teacher; (49) high school teacher; (50) nursery school teacher

### 9. (Idea about living in the same house with partner's parents)

(1) You can live in the same house with your partner's parents.
(2) You do not want to live together right after a marriage, but can live together in the future.
(3) You do not want to live together.

### 10. (Conditions for living in the same house with your parents that you have in mind)

(1) You need to live in the same house with your parents.
(2) You want to live together in the future.
(3) You need not live together.

After finishing clicking answers to these series of questions, the terminal operator puts the mouse on a button 5 and clicks the mouse MC in accordance with an instruction on the screen.

When the button 5 is depressed, the control means 11 urges the terminal operator to recheck the contents on the screen. After the terminal operator rechecks them, the control means 11 controls the terminal to display a small board to urge the terminal operator to put the mouse on the button 5 and click the mouse again. If the terminal operator intends to correct the contents, the terminal operator does so in accordance with the procedures stated above.

In any case, after the button 5 is re-depressed, the control means 11 moves the processing to a step S5, in which the control means 11 controls the display means of the terminal 1011 to display a screen as shown in Fig. 12 to urge the terminal operator to input his or her view of world and sense of values by sentences.

An example considered to be desirable and appropriate will be shown below.

The terminal operator answers two questions each within 300 characters. In the first question, the terminal operator is urged to express his or her view of world and sense of values by sentences. In accordance with the content, the terminal operator is also urged to input a title. While it is assumed herein the number of characters is limited to equal to or less than 300, this corresponds to the Japanese. In case of using the other language, the number of characters may be appropriately set so that the content corresponding to 300 Japanese characters can be expressed.

The second question is intended to ask what the terminal operator thinks and what the terminal operator says by mentioning a concrete scene which an ordinary person in the society normally experiences. By this question, the view of world and sense of values of the terminal operator are grasped with a different angle.

The processing will now be described in accordance with this example. In this example, the terminal operator is urged to input an answer to the first question into an input box 6, and that to the second question into an input box 7.

Meanwhile, after finishing inputting necessary information in accordance with instructions on the screen, the terminal operator puts the mouse on a button 8 and clicks the mouse.

When the button 8 is depressed, the control means 11 urges the terminal operator to recheck the contents on the screen. After recheck, the control means 11 controls the terminal to display a small board to urge the terminal operator to put the mouse on the button 8 and click the mouse again.

If making corrections, the terminal operator does so. When the button 8 is depressed again, the control means 11 moves the processing to a step S6, in which the control means 11 controls the display section of the terminal 1011 to display a screen as shown in Fig. 13 to urge the terminal operator to input the other information on himself or herself. To be specific, the terminal operator is asked the year of birth as well as the name and course of the final school, whether graduating or leaving school without graduating, as fixed questions and urged to answer them.

In this embodiment, the terminal operator is urged to input answers into input boxes 9 and 10, respectively.

At this stage, items related to private matters such as what is your hobby, what do you play, what is your favorite foods, where do you want to go as a honeymoon, are not put. According to the conventional business, it is known that these items are normally written if there is a letter of introduction. In this case, there is a probability that this causes a kind of peculiar situations mixed with the above-stated private elements to be built at the start of an initial meeting. To avoid these situations, these items are not put at this stage.

After finishing inputting the necessary information as described above, the terminal operator puts the mouse on a button 11 and clicks the mouse.

When the button 11 is depressed, the control means 11 urges the terminal operator to recheck the contents on the screen. After recheck, the control means 11 controls the display section of the terminal 1011 to display a small board urging the terminal operator to click on the button 11.

If making corrections, the terminal operator does so. When the terminal operator depresses the button 11 again, the control means 11 controls the display section of the terminal 1011 to display a notification to the effect that "your registration application is completed", moves the processing to a step S7. In the step S7, the control means 11 stores a series of items of information that have been input so far, i.e., the information input on the question and answer screen, the view of world and sense of values input screen, and the other information input screen, as information for waiting for final registration by adding these pieces of information to the registration procedures with respect to the alternative questions for content grasp checking related to the view of world and sense of values, in the storage means 16. A member number allocated to the terminal operator at this moment is displayed on the display section of the terminal 1011 under the control of the control means 11 and notified to the terminal operator. Thereafter, the control means 11 returns the processing to the step S1 in which the registration application dedicated site front page screen is displayed. Thus, the processing related to the application for the registration of the self information of the member is completed.

### 2: Registration

The terminals 1031, 1032, ... are connected to the server 10 and hold communication with the server 10, respectively. Each of the terminals is used by the company side for business operation to finally complete registration by adding alternative content grasp check questions to the information stored in the storage means 29 on each member completed with registration application. The detail of the terminals will be described later. Now, the description will be given while assuming that the terminal 1031 is connected to the server 10 for the purpose of use stated above for the convenience of explanation. When the terminal 1031 is connected to the server 10, the control means 11 detects the connection of the terminal 1031 to the server 10 through the input control means 12, and controls the terminal 1031 in accordance with the main programs. Fig. 4 is a flow chart showing the operations of the main programs.

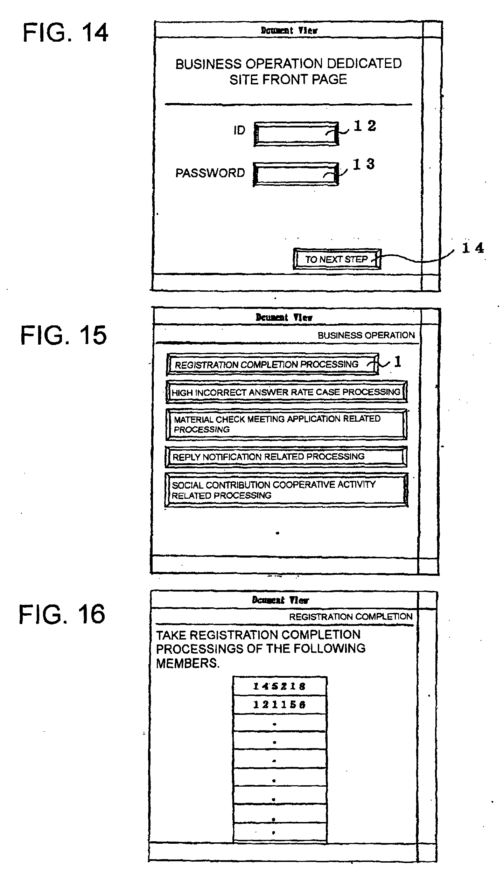

The terminal operator is a business operator. First, in a step S8 shown in Fig. 4, the control means 11 controls the display section of the terminal 1031 to display a business operator dedicated site front page screen as shown in Fig. 14. On this screen, the terminal operator is urged to input an ID and a password. In response to this, the terminal operator puts the mouse cursor MC on the display region of an input box 12, clicks the mouse cursor MC, and then inputs a business operator ID by the input section. Likewise, the terminal operator then puts the mouse cursor MC on the display region of an input box 13, clicks the mouse cursor MC, and then inputs an ID by the input section. After completing these operations, the terminal operator puts the mouse cursor MC on the display region of a button 14 and clicks the mouse cursor MC in order to notify the server 10 of the completion. In response to this, the control means 11 moves the processing to a step S9, in which the control means 10 checks whether or not the ID and password are appropriate ID and password under the management of the business operator by searching the ID and password file. If determining that the ID and password are inappropriate, the control means 11 moves the processing to a step S3. In the step S3, the control means 11 controls the display section of the terminal 1031 to display a notification to the effect that "your ID or password is illegal". If determining that the ID and password are appropriate, the control means 11 performs a processing in the next step S10.

In the step S10, the control means 11 controls the display means of the terminal 1031 to display an operation processing menu screen as shown in Fig. 15 to urge the terminal operator to select a desired processing from among "registration completion processing", "high incorrect answer rate case processing", "material check meeting application related processing", "replay notification related processing", "social contribution cooperative activity related processing" and the like which are the processings in this embodiment.

In this case, the terminal operator puts the mouse cursor MC on the display region of a button 15, clicks the mouse cursor MC, and selects the "registration completion processing". If so, the control means 11 which detects the selection moves the processing to a step S11 shown in Fig. 4. In the step S11, the control means 11 controls the display section of the terminal 1031 to display a list of registered member numbers to urge the terminal operator to take registration completion procedures for cases one by one as shown in Fig. 16. The registered member numbers are arranged in the descending order of registration application. The terminal operator puts the mouse cursor MC on the display region of the member numbers and clicks the mouse cursor MC.

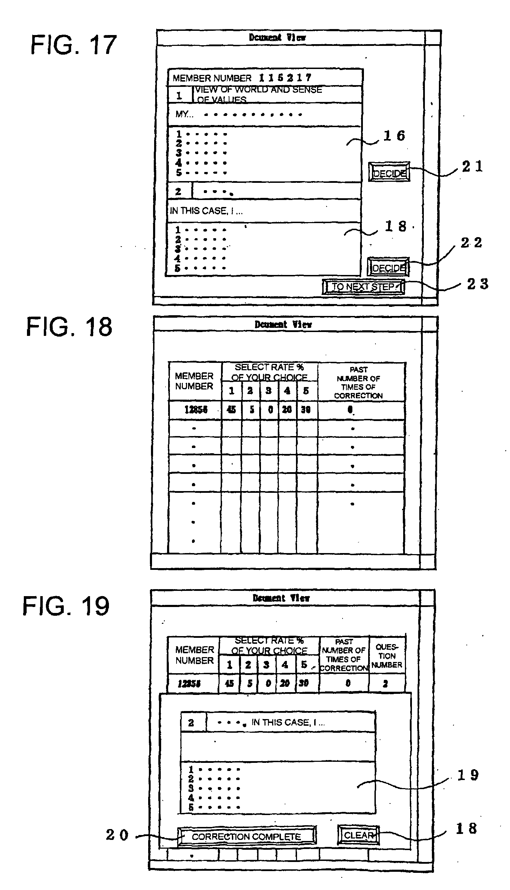

Then, the control means 11 moves the processing to a step S12, in which the control means 11 controls the display section of the terminal 1031 to display a screen as shown in Fig. 17. On this screen, alternative questions for content grasp checking are created for, for example, Questions 1 and 2 described above, respectively, and the terminal operator is urged to input answers into input boxes 16 and 17, respectively. In response to this, the terminal operator puts the mouse cursor MC on the display region of each of the input boxes 16 and 17, clicks the mouse cursor MC and inputs a choice including only one correct answer by the input section.

Considering the overall situations, it appears that five choices per question are appropriate. Therefore, description will be given while assuming that five choices are prepared. In this case, it is necessary to give consideration not to provide too difficult choices. This is because it is necessary to avoid a state in which the terminal operator finds difficulties in reaching correct answers for a certain member and meeting application is greatly adversely influenced. First of all, the purpose of giving alternative questions is to prevent a member from having an incentive related to a meeting from the other information on a corresponding member of the opposite sex without understanding his or her ideas about the view of world and sense of values or, in an extreme case, without hardly reading the information, i.e., without making the information search member convince or understand the information individually and concretely. Therefore, it suffices to prepare questions with such level that this purpose can be fulfilled. Namely, according to the present invention, the above-stated contents form the direction and basis for creating the alternative questions.

In some cases, the questions are made too difficult or an incorrect answer choice different from a correct answer choice is erroneously recognized as the correct answer choice. According to the present invention, the following mechanism is provided so as to lessen or eliminate such a risk. First, if cases having an incorrect answer rate of not less than 75% in a total of the terminals 1011, 1012, 1013, ... and clicked as answers 10 or more times are formed into a high incorrect answer rate case list. Information on the member numbers of members, question numbers, the selection rates of the respective choices of the questions is stored in the high incorrect answer rate case file. As for this, if the business operator puts the mouse cursor MC on the display region of the "high incorrect answer rate case processing" on the business operation dedicated site and clicks the mouse cursor MC, a list as shown in Fig. 18 is displayed. After checking the content of this list, the terminal operator clicks on the display region of the member number. As a result, a display in a style as shown in Fig. 19 starts right under the corresponding member number box. To be specific, the control means 11 controls the display section of the terminal to display the status of the question currently stored by searching the member file. By clicking on a button 18, the state turns into a state in which no word is displayed in an input box 19. Using this state, if the operator makes corrections or directly puts the mouse cursor MC on the input box to appropriately make corrections, and finally clicks the mouse cursor MC on a button 20, the correction procedures by the business operator is completed. Following this, the control means 11 controls the terminal to correct the member file. In the list, percentages of the correct answer choices are given a certain different color. In addition, the history of the numbers of times of correction is also stored in the high incorrect answer rate case list file, so that the numbers of times of correction are displayed in the list. It is noted that a series of control operations stated above are conducted by the control means 11.

After inputting five choices for the first question, the terminal operator clicks on a button 21 shown in Fig. 17 in accordance with an instruction on the display screen in a step S12. Likewise, if the terminal operator then puts the mouse cursor MC on the display region of the correct answer choice and clicks the mouse cursor MC in accordance with instructions on the display screen, the color of the entire choice including the number is changed to a certain different color. As for the second question, similarly in style to the first question, the terminal operator clicks on the button 22. The instruction on the screen urges the terminal operator to click on a button 23. If the terminal operator clicks on the button 23 in response to this instruction, the control means 11 moves the processing to the next step S13.

In the step S12, the control means 11 controls the display section of the terminal 1031 to display the content of the other information input by the information registration member on himself or herself on the screen. On this screen, the instruction is given as follows. If the content is inappropriate, i.e., if the content differs from the content of a copy of a certificate which certifies respective pieces of information which the member presented in advance or the content is unclear, the business operator is urged to asks the member, and to change the incorrect content to a correct one. If the content is appropriate or clear, the terminal operator clicks on a predetermined button as it is. If the terminal operator perform the processing in accordance with the instruction, the control means 11 moves the processing to a step S14, in which the information provided so far is edited into a predetermined format and stored in the corresponding member file. Thus, the registration related to the member is completed.

### 3: Search and application for meeting

As described above, the terminals 1011, 1012, ... are connected to the server 10 and hold communication with the server 10, respectively. Each of the terminals functions as both the terminal of an information registration member and that of an information search member. For the convenience of explanation, it is assumed herein that the terminal 1011 is connected to the server 10 and the terminal operator of the terminal 1011 is an information search member.

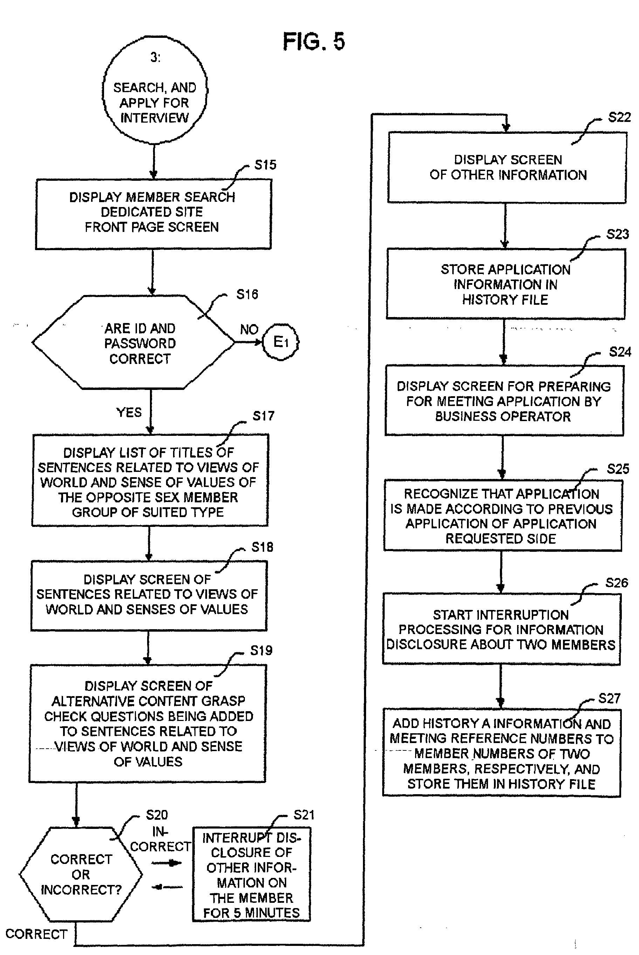

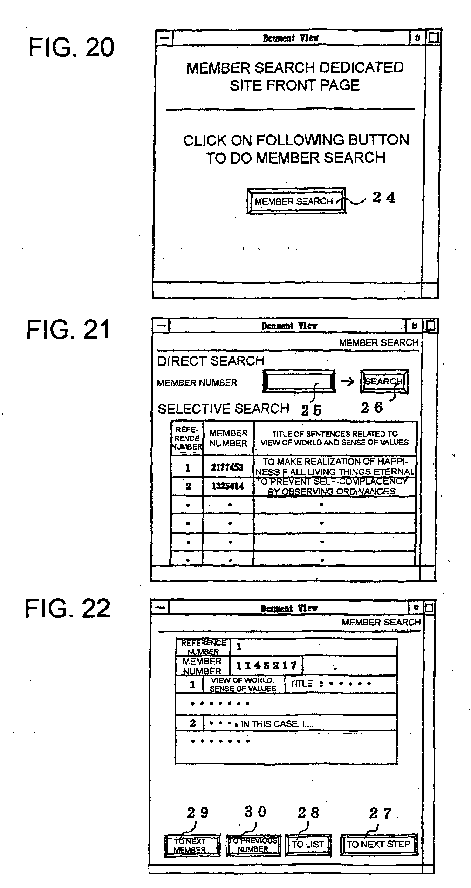

First, in a step S15 shown in Fig. 5, the control means 11 controls the display section of the terminal 1011 to display a member search dedicated site front page screen as shown in Fig. 20 to urge the terminal operator to do "member search" which is one of the processings in this embodiment.

Here, the terminal operator puts the mouse cursor MC on the display region of a button 24 in accordance with an instruction on the screen, clicks the mouse cursor MC, and enters the stage of the "member search". The control means 11 detects this and controls the display section of the terminal 1011 to display an ID and password input screen similarly to that used in the registration application. Thereafter, the same procedures are carried out as those for the registration application for a while.

Through these operations, the processing moves to a step S16, in which the control means 11 checks whether or not the ID and the password are appropriate ID and password under the management of the company by searching the ID and password file.

If determining that the ID and password are inappropriate, the control means 11 moves the processing to a step S3, in which the control means 11 controls the terminal 1011 to display a notification to the effect that "your ID or password is illegal" . The control means 11 then moves the processing back to the step S15, in which the control means 11 controls the display section of the terminal 1011 to display a screen which also serves as an entry to member search, i.e., the member search dedicated site front page screen again. If determining that the ID and password are appropriate, the control means 11 move the processing to the next step S17.

In the step S17, the control means 11 controls the terminal 1011 to display a list in which a set of the member number and titles of a member group of the opposite sex of a type suite to the member are given in a row for each member as shown in Fig. 21. On this screen, the terminal operator is notified that the terminal operator can start individual, concrete search by sequentially clicking the mouse cursor MC on the display regions of the rows each including the member number to the titles of members of the opposite sex the content of information on whom the terminal operator wants to know in order. To facilitate rereading the contents, the content can be displayed soon after inputting the member number of the desired member. In that case, the terminal operator inputs the corresponding number into an input box 25 and clicks on a button 26, whereby the content corresponding to the desired member is directly displayed. It is noted, however, that the member number the disclosure of which is interrupted or the registration of which is deleted or is not originally present in the member file is displayed on a small board right after clicking on the button 326. After a few seconds' display, the small board automatically disappears. Further, the list has the member numbers arranged in the descending order of the completion of registration completion procedures. If the disclosure of a member number is interrupted or the registration of the member number is deleted in the member file, the content of a member number right under the former member number is displayed without giving a vertical interval on the screen, i.e., displayed by advancing the reference number. That is, the reference numbers are designed not to be skipped. This mechanism applies to the respective sites stated above and below. The member subjected to interruption cancellation is displayed as the latest member which has been completed with procedures, i.e., displayed on the bottom of the list. These control operations are also carried out by the control means 11.

If the terminal operator issues an instruction to search a member individually, concretely by the above-stated method in the step S17, the control means 11 moves the processing to a step S18, in which the control means 11 controls the display section of the terminal to display a view screen of description contents related to the view of world and the sense of values as shown in Fig. 22. The input content related to the view of world and sense of value of the corresponding member is displayed, so that the terminal operator can read the content here on this screen. If reading the content and eventually desiring to read the other information on the member, or desiring to hold a meeting already at this stage, the terminal operator clicks on a button 27 in accordance with an instruction on the screen. If the button 28 is clicked on, the list is displayed. If a button 29 is clicked on, information on the member right under information on the corresponding member in this list, i.e., the view screen of sentences related to the view of world and sense of values of the member is displayed. If there is no such member information under the information on the corresponding member and this button is clicked on although the display related to the corresponding member is on the bottom, a notification to the effect is displayed on a small board for a few seconds and the small board automatically disappears after the few seconds. Further, when a button 30 is clicked on, information on the member just on information on the corresponding member, i.e., the view screen of sentences related to the view of world and sense of values of the member is displayed. In this case, if there is no such this button is clicked on although there is no member information on the information on the corresponding member and this button is clicked on although the display related to the corresponding member is on the top, a notification to the effect is displayed on a small board for a few seconds and the small board automatically disappears after the few seconds. The above-stated control operations are also carried out by the control means 11.

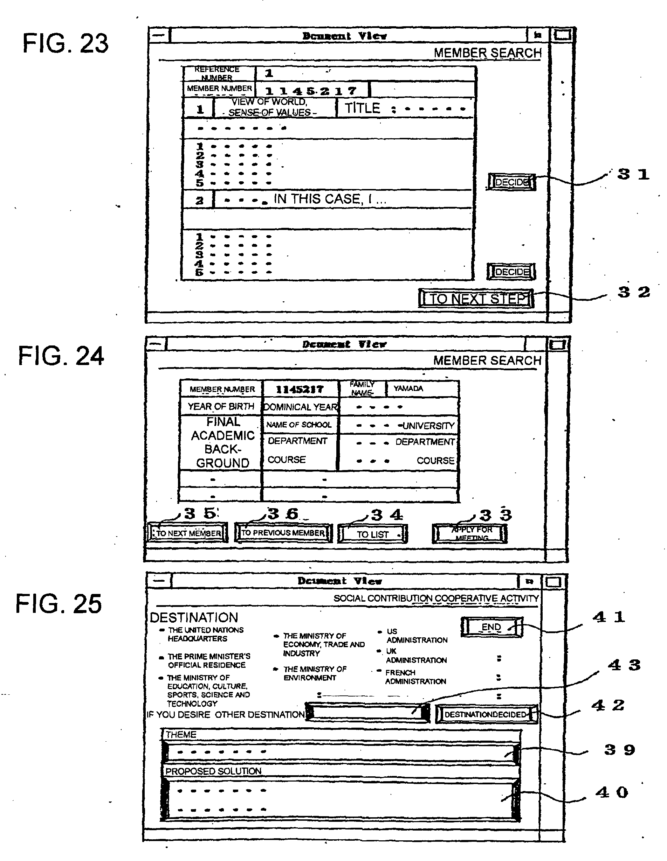

Meanwhile, if the terminal operator clicks on a button 27, the control means 11 moves the processing to a step S19 accordingly, and displays a screen of content grasp check questions as shown in Fig. 23.

The reason for putting this step according to the present invention is described in "2: Registration" section. The reason will be described at a different angle. The reason for providing such a mechanism that the member who is doing search cannot move to the next step unless he or she does not check the content of the view of world and sense of values of the other member in advance, is to prevent things like the appearance, looks or atmosphere from becoming the primary incentive at least toward the individual, concrete formation of human relation. That is, it is intended to provide such a mechanism as to avoid the formation of the incentive derived from these things as much as possible and to be able to form the human relation based, first of all, on the judgment of personality including the view of world and sense of values. In addition, even if the content of the information is not enough to completely grasp the view of world and sense of values of the other member, it is considered that the member tends to relatively pay attention to the grasping of the view of world and sense of values compared with a case where the member does not check them in advance. Further, if it is clearly understood from the sentences at this moment that the other member differs so greatly from the member, the member can rationally judge that the other member is not suited as his or her marriage partner and decide not to select the other member at this stage. If a party, an event, a circle, a photograph-added letter of introduction, or a letter of introduction which makes it possible for the member to first see the annual income, the name of the company which the other member works for and the like, is provided as the first occasion of making the member know the other member individually and concretely, the member may possibly be attracted to the appearance or looks of the other member at glance or to the good manner of speech and, therefore, the appearance of the other member or pay attention to the high annual income at this stage. In that case, if the member recognizes the great difference in humanity later but cannot cancel the previous incentive, they will be faced with a trouble after a marriage. It is considered that this leads to a discord between the couple and further a divorce resulting from the discord. At present, it is well known that some countries, except for Protestant countries, have relatively high divorce rates among developed countries. The economic self-reliance of women has become generally possible, so that the above-stated structure may surface numerically through a change in numerical values of the divorce rates. For reference, it is known that Protestants are prohibited from divorce. Considering the above, particularly if there is a probability of a marriage in the future, it is judged that it is preferable to provide a mechanism capable of avoiding the occurrence of troubles as much as possible, which judgment is one of those included in the construction of the present invention. Taking them into consideration, the overall mechanism which includes the above-stated step is provided.

In the meantime, on this screen, sets of the descriptions of the member in reply to the first and second questions and content grasp check questions, respectively are displayed. In accordance with an instruction on the screen, the terminal operator first selects one choice which he or she considers as the correct content of a description related to the first question, puts the mouse cursor MC on the display region of this choice from the number to sentences of the choice, clicks the mouse cursor MC and then puts the mouse cursor MC on a button 31 and clicks the cursor MC. If the terminal operator clicks on the display region of the choice from the number to the sentences of the choice by the mouse cursor MC, the color of the choice is changed to a certain different color. The above-stated control operations are also carried out by the control means 11.

Through these operations, the processing moves to a step S20, in which the control means 11 checks whether or not the answer of the terminal operator is correct by searching the corresponding member file. If determining that the answer is incorrect, the control means 11 moves the processing to a step S21. In the step S21, the control means 11 controls the display section of the terminal to display, as a small board, a notification to the effect that "your answer is incorrect. The re-acceptance of an answer is interrupted for five minutes. After five minutes, you can answer the question again. Therefore, read the content thoroughly again, grasp the content and then answer the question again.", performs selection cancellation for returning the color of the selected choice which is changed to the certain different color by the previous clicking, to the original state, and controls the interruption of the acceptance of the answer as displayed on the small board. To be specific, the control means 11 controls the terminal to prevent the color of a choice from changing to the certain different color even if the terminal operator clicks on the display region of one of the five choices. It is noted that this control operation over the terminal as stated above continues for five minutes even if the terminal operator temporarily closes the site and returns to this site screen. This control operation is also carried out by the control means 11. While the control duration is set at five minutes herein, it may be set at, for example, 10 minutes. Namely, the duration is set at five minutes based on the fact that if the duration is so short, the terminal operator is likely to neglect grasping the content and, conversely, if the duration is so long, it adversely influences search. If determining that the answer is correct, the control means 11 controls the display section of the terminal to display a notification to the effect that "your answer is correct" on a small board. The display of this notification continues until the screen is changed to that of the display in the next step S22. The second question is controlled by the control means 11 in the same manner as that for the first question. If a notification to the effect that both of the answers to the two questions are "correct" is displayed, the button 32 turns into a state in which the terminal operator can depress the button 32 by clicking the mouse cursor put on the button 32. If the terminal operator clicks the mouse cursor MC on the button 32 in accordance with an instruction on the screen, the control means 11 moves the processing to the next step S22 accordingly.

In the step S22, the control means 11 controls the display section of the terminal 1011 to display a screen of the other information on the corresponding member as shown in Fig. 24. On this screen, the terminal operator checks the other information, takes into account of an explanation on the screen and then clicks on a button 33 if the terminal operator applies for a meeting. If the terminal operator clicks on buttons 34, 35 and 36 by the mouse cursor MC, the control means 11 controls the terminal to make display as in the same manners as those for clicking on buttons 28, 29 and 30 as already stated above, respectively.

Now, if the button 35 is clicked on, the control means 11 moves the processing to the next step S23 accordingly. In the step S23, the control means 11 checks whether or not the application is an application made according to a previous application by searching the history file. In this case, the control means 11 determines that the application is not made according to the previous application, moves the processing to the next step S23, in which the control means 11 stores the application in the history file as information that the member makes a type 1 application with respect to a meeting with the other member. The type 1 application is defined as an application which is not made after a search which is done according to a previous application. For reference, a type 2 application is defined as an application which is made after a search which is done according to a previous application. While the detail of the member numbers will be described later in detail, the member numbers are stored in the history file in order.

It is assumed hereafter that the terminal operator is the business operator. If the business operator opens the operation processing menu screen by the method already described above and clicks on a button for the "material check meeting application related processing", then the control means 11 searches information on the application for a meeting from the history file and displays sets of the member numbers of the members who apply for meetings and those of the members who are requested to hold a meeting for the meetings in rows in the order of application, respectively, in a step S24. It can be said that this processing is the display of a screen for dealing with the application for a meeting by the business operator. If the terminal operator clicks on the display region of the member number of a member who applies for a meeting on this screen, a contact to the application-side member is displayed. If the terminal operator clicks on the display region of the member number of a member who is requested to hold a meeting, a contact to the requested member is displayed. These control operations are also carried out by the control means 11. Using them, the business operator contacts the requested member and urges the member to search the application-side member. In response to this, the requested member does a search about the application-side member through a series of steps described above. If the requested member clicks on a button 35, the control means 11 checks whether or not the application is made according to a previous application in a step s25 by searching the history file. In this case, the control means 11 determines that the application is made according to the previous application, i.e., the application is the type 2 application in a step S25. The control means 11 then moves the processing to a step S26, In the step S26, the control means 11 simultaneously searches and checks the history file and the ID and password file, thereby controlling a processing for interrupting the disclosure of the information on the two members until the cancellation of interruption processing control to be described later is made to the member search site opened by an ID and a password other than the ID's and passwords allocated to the two members and the business operator. By doing so, the respective pieces of information on the two members are displayed such that information on the next member right under one member in the list is displayed without intervals while advancing the reference number with respect to the information disclosure interruption processing. If there is no information on the next member right under one member, nothing is displayed. It is noted that the ID's and passwords are stored in the ID and password file while differentiating those allocated to the respective members from those allocated to the business operator.

The reason for providing a mechanism of restricting information disclosure as described above is to make it possible for the two members to carefully recognize each other at ease once the meeting application is made. If there is a higher probability that each member also competing with the other members, there is a fear that the member pays more attention to winning over the competitive members. If so, it is considered that the probability that the member neglects the recognition of the other member, which is inherently the most significant, becomes relatively higher than a case where the member does not pay much attention to winning over the other members. It is considered to be necessary to rationally differentiate fields suited for competition from those unsuited for competition. Provided that the two members get married in the future, it is necessary to consider the influence on not only the two members themselves but also on the child of the couple. Namely, the mechanism is provided so as to avoid the risk of the discord between the couple and a divorce as much as possible by allowing the two members to recognize each other more thoroughly.

If the type 2 application is made, the control means 11 adds numbers each of which consists of upper two figures common to the two members and lower two figures different between the two members as material check meeting and social contribution cooperative activity reference numbers, to the two members, respectively, and stores the information in the history file in a step S27 besides the processing in the step S26. It is noted that figures irrelevant to each other are set as the lower two figures of the respective numbers. For the sake of explanation, the information indicating that the two members reach a compromise about having a material check meeting will be referred to as "history A information". In addition, the material check meeting and social contribution cooperative activity reference number will be referred to as "meeting reference number".

### 3; Material check meeting

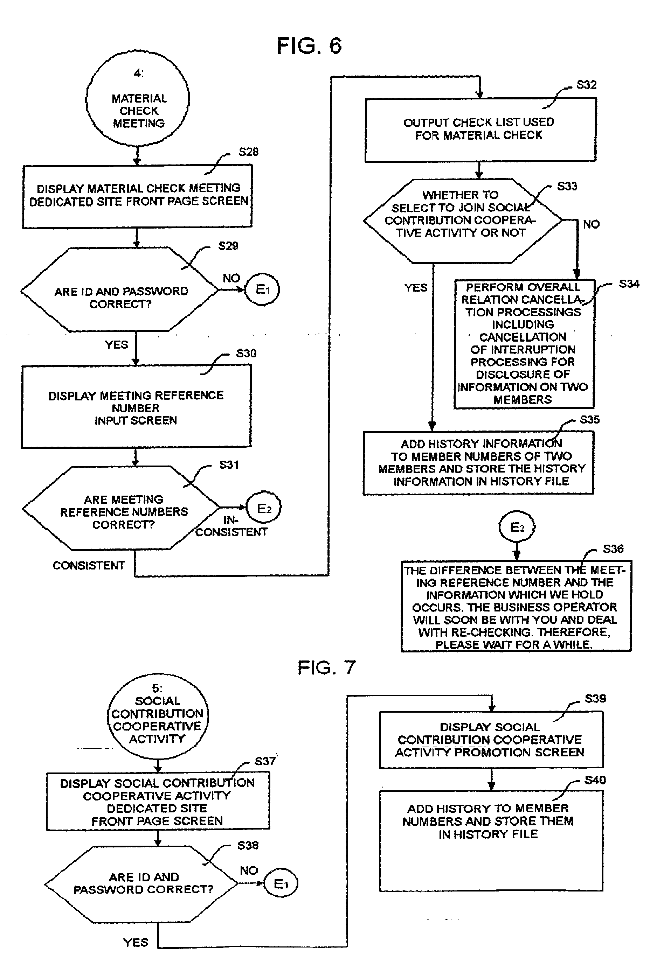

As described above, it is assumed herein that the terminals 1021, 1022, ... are disposed in the offices of the company and that each terminal operator is a member who holds a material check meeting. For the sake of explanation, it is assumed that the terminals 1021 and 1022 are connected to the server 10. The control means 11 detects the connection of the terminals 1021 and 1022 to the server 10 through the input control means 12, and controls the terminals 1021 and 1022 in accordance with the main programs. Fig. 6 is a flow chart showing the operations of the main programs.

First, in a step S28 shown in Fig. 6, the control means 11 controls the display section of each of the terminals 1021 and 1022 to display a material check meeting dedicated site front page screen to urge each terminal operator to input an ID and a password. If the terminal operator inputs an ID and a password in response to an instruction, the control means 11 moves the processing to a step S29, in which the control means 11 checks whether or not the ID and password are appropriate ID and password under the management of the company. If determining that the ID and password are inappropriate, the control means 11 moves the processing to a step S3, in which the control means 11 controls the display section of the corresponding one of the terminals 1021 and 1022 to display a notification to the effect that "your ID or password is illegal" . The control means 11 then returns the processing to the step S28, in which the material check meeting dedicated site front page is displayed. If determining that the ID and password are appropriate, the control means 11 performs a processing in the next step S30.

In the step S30, the control means 11 controls the display section of each of the terminals 1021 and 1022 to display a meeting reference number input screen to urge each terminal operator to input his or her meeting reference number and then to click on an input completion button. At the same time, an alarm to the effect that "to click on input completion buttons after inputting meeting reference numbers, please cooperate with each other in clicking on the buttons as simultaneously as possible. Please allow the business operator to be with you again if one terminal operator clicks on the input completion button and the other terminal operator does not clicks on the input completion button within 15 seconds after the clicking by the one terminal operator." is displayed. If the respective terminal operators input the meeting reference numbers and one terminal operator clicks on the input completion button first, the control means 11 controls the display section of the terminal of the terminal operator who clicks on the button first to display a notification to the effect that "please wait for a while". If the other terminal operator clicks on the input completion button within 15 seconds after the clicking by the one terminal operator, the control means 11 moves the processing to a step S31, in which the control means 11 searches the history file and collates the reference numbers. If there is no problem, the control means 11 moves the processing to the next step S33. If one of the reference numbers differs from the information in the history file, the control means 11 moves the processing to a step S32. In the step S32, the control means 11 controls the display section of each of the terminals to display a notification to the effect that "the difference between the reference number and the information which we hold occurs. The business operator will soon be with you and deal with re-checking. Therefore, please wait for a while". Thereafter, the control means 11 returns the processing to the step S30. In the step S30, the control means 11 controls the display section of each terminal to display the meeting reference number input screen again and makes a telephone call to the business operator with a message that "as for the member with member number xxx and the member with member number xxx, the difference between the reference number and the information in the history file occurred. Please go to the two members promptly and check" carried. If the control means 11 cannot get through to the business operator, the control means 11 exercises control to repeatedly dial the number of the business operator until it can get through to the operator. Further, in the step S30, if the other terminal operator does not click on the input completion button within 15 seconds after the clicking by the one terminal member, the control means controls the display section of the terminal of each terminal operator to display a notification to the effect that "we are afraid that those present are different from the planned members. The business operator will soon be with you and deal with checking. Therefore, please wait for a while", and then to display the meeting reference number input screen. In addition, the control operation 11 makes a telephone call to the business operator with a message that "as for the member with member number xxx and the member with member number xxx, those present may be different from the planned members. Please go to the two members promptly and check" carried. If the control means 11 cannot get through to the business operator, the control means 11 exercises control to repeatedly dial the number of the business operator until it can get through to the operator.

The reason for providing a series of mechanisms in the steps S30 and 31 will be described. If the two members are remote from each other in terms of living area, they hold a meeting using videophones, and the meeting is held between the members other than the intended members by some mistake of the company side, which appears to often occur, then the meeting is held in the circumstances in which the two members do not check the mutual views of world and sense of values. If the incorrect couple starts seeing each other by taking advantage of this accident, there is a probability that the trouble stated above occurs similarly to a case where the mutual understanding starts at the primary information given by, for example, a party, an event, a circle, or a photograph-added letter of instruction besides this mistake. If so, the object of the present invention cannot be realized. This is why the series of mechanisms are set in order to prevent the situations. Namely, the mechanisms are provided as a safety system consisting of the two stages and set as one of the mechanisms for realizing the object of the present invention.

In the step S33, the control means 11 controls the display section of each of the two terminals to display a screen of a material check list. The control means 11 controls the display sections of the terminals of the two members to display the mutual statuses of answers to the above-stated question-answer items on the screens to the two members, respectively, by searching the member file. Namely, the color of the selected choice is changed to a certain different color. The control means 11 controls the display section of each terminal to display the screen, and at the same time, controls a printer connected to each terminal to print out a copy of the answer status. On this screen, a small board is displayed in the blank part. On the board, each of the two members is urged to click on the display region of each question part, e.g., the "1. (View of life in terms of job)" part as check while mutually checking the items one by one, and also urged to mutually check the detailed contents based on these items and the other contents. Further, each member is urged to take memos on the printed-out copy so as to judge future matters after checking of the material. Further, each member is urged to click on a button for finishing the material check which is put in the final part of the continuous screen at the end of the material check meeting. If even one item the display region of which the member does not click is found after clicking, the control means 11 controls the display section of each terminal to display a notification to this effect and to return to the first part of the continuous screen. On the other hand, if the display regions of all the items are appropriately clicked on, the control means 11 adds the history of this procedure to each member number stored in the history file. The control means 11 then returns the processing to the step S28 of displaying the material check meeting dedicated site front page screen. Thereafter, the two members open answer dedicated sites after judging the future matters within a few days, respectively. First, each member is urged to input the ID and password. This is the same as that already described above. In this case, particular, the control means 11 checks whether or not the ID and password are appropriate ID and password under the management of the company by searching the ID and password file. If determining that the ID and password are inappropriate, the control means 11 controls the display section of the terminal of the corresponding one of the members to display a notification to the effect that the ID or password is inappropriate and to return the present screen to the first screen of the answer dedicated site. If determining that the ID and password are appropriate, the control means 11 moves the processing to the next step S34. In the step S34, the control means 11 controls the display section of each terminal to display a screen for replying to whether the member chooses to join the social contribution cooperative activity processing as the next stage, to urge the member to click on one of buttons "select" and "not select". If each terminal operator clicks on the "select" button, the control means 11 moves the processing to a step S36, in which the control means 11 adds this information, as one piece of history information, to the member number of each terminal operator stored in the history file. If one of the terminal operators clicks on the "not select" button, the business operator opens the business operation dedicated site, and this case is displayed on the list which is displayed when the business operator selects the "answer notification related processing" from the menu screen and clicks on the mouse cursor MC. The control means 11 controls the list to display the member number of the member, the member number of the other member and the meeting reference numbers of the two members in respective rows per case. On this screen, if the display region of the member number is clicked on, a contact to the member is displayed on a small board. It is noted that this small board disappears by clicking on the board again. Further, on the continuous screen of the list, if a "relation cancellation" button provided on the first part of the screen is clicked on and the member number of the member or that of the other member number is clicked on, the control means 11 moves the processing to a step S35. In the step S35, the states of the member numbers of the two members are returned to their original states in which no history information is added, in the history file. In addition, the states of the member members are returned to the original states in which no application is made for the case such as the cancellation of the disclosure interruption of the member information on the two members which has been carried out based on the history information so far. It is noted that the business operator contacts the other member by e-mail or telephone based on the display of the contact stated above.

### 4: Social contribution cooperative activities

It is assumed herein that the terminals 1021, 1022, ... are disposed in the office of the company as already stated above and that the terminal operators are members engaged with social contribution cooperative activities. For the convenience of explanation, the terminals 1021 and 1022 are connected to the server 10. The control means 11 detects the connection of the terminals 1021 and 1022 to the server 10 by the input control means 12, and controls the terminals 1021 and 1022 in accordance with the main programs. Fig. 7 is a flow chart showing the operations of the main programs.

First, in a step S7 shown in Fig. 7, the control means 11 controls the display section of each of the terminals 1021 and 1022 to display a social contribution cooperative activity dedicated site front page screen to urge each terminal operator to input an ID and a password. If each terminal operator inputs an ID and a password in response to the instruction, the control means 11 moves the processing to a step S38, in which the control means 11 checks whether or not the ID and password are appropriate ID and password under the management of the company by searching the ID and password file. The control means 11 also checks whether or not a material check meeting has been already held and, if the meeting has been held, whether or not the meeting corresponds to which day of the social contribution cooperative activities, the first day, the second day, or the third day by searching the ID and password file and the history file. If determining that the ID and password are inappropriate, the control means 11 moves the processing to a step S3, in which the control means 11 controls the display section of either the terminal 1021 or 1022 to display a notification to the effect that "your ID or password is illegal". The control means 11 then returns the processing to the step S36, in which the social contribution cooperative activity dedicated site front page screen is displayed again. If determining that the ID and password are appropriate, the control means 11 performs a processing in the next step S39.

In the step S39, the control means 11 controls the display section of each of the terminals 1021 and 1022 to display a social contribution cooperative activity promotion screen as shown in Fig. 25. On this screen, each of the two members who are the terminal operators of the respective terminals is urged to set a theme from various social issues, cooperates in finding a solution, forming them mainly into sentences, and to input the theme into an input box 39 first and the solution into an input box 40. In actual input operation, the two members may input them individually or they may alternately input them using one of the terminals. As for the unused terminal, an end button 41 is clicked on, whereby the control means 11 returns the processing to the step S37, in which the social contribution cooperative activity dedicated site front page screen is displayed again. Further, the destination of the contents can be designated in advance in accordance with the members' desires. The display region of the desired destination among the United Nations headquarters, the Prime Minister's official residence, the Ministry of Education, Culture, Sports, Science and Technology, the Ministry of Economy, Trade and Industry, the Ministry of Environment, the Ministry of Land, Infrastructure and Transport, ..., Administrations of various countries and states, various public institutions and the like, is clicked on, and the button 42 is clicked on, thereby defining the destination. If a desired destination is not displayed, the desired destination is input into a box 43, and the button 42 is then clicked on, thereby defining the destination. A selection cancellation method is the same as that described in "1: Application for registration" section. When the end button 43 is finally clicked on, the control means 11 returns the processing to the step S37, in which the social contribution cooperative activity dedicated site front page screen is displayed. Further, the control means 11 moves the processing to a step S40, in which the contents and the history are associated with the member numbers of the respective two members and stored in the history file.

The business operator clicks on a "social contribution cooperative activity related processing" button on the business operation dedicated site, thereby opening a list in which the member numbers of the two members who were engaged with the social contribution cooperative activity are displayed in rows, respectively. By clicking on the display region of each member number, the contents are displayed. After checking the contents, the business operator clicks on a button for transmitting the contents to the destination, whereby the control means 11 transmits the contents thereto over e-mail. If the members select a destination such as the administration of a foreign country which uses a different language, the control means 11 exercises control so that the Japanese is promptly translated into the language of the country by a translation software and that the translated contents are written along those written in the mother language. In this case, a message to the effect that the contents translated by the translation software are written; however, in case of poor translation, the contents written in the mother language are also written along the translation, is given. Further, it is possible to designate into which language the contents are to be translated. In that case, the designation can be carried out by clicking on a button for the designation or a button for special designation.

At this moment, when the history includes the end of the third day of the social contribution cooperative activity, a total of two social contribution cooperative activity completion certificates are printed out by the printer set to the terminal of the business operator to the respective two members. By the history that the third day ended, the control means 11 controls all the information stored in the member file to be transmitted together with the ID and password information to the original member file and stored therein. Following this, in a step S41, the information on the two members stored in the ID and password file, the history file, and the member file is deleted.

That is, when the third day ends, the mediation of the company and business operator with respect to the relationship between the two members is dissolved. The dissolution is clearly mentioned in the social contribution cooperative activity completion certificates.

The original member file is made effective use of if the original member applies for registration again. The ID and password, for example, among the contents stored in the original member file can be moved to the ID and password file and the other original member information can be moved to the member file by the control means 11.

Supplemental description will now be given. First, as regards type determination, each member is limited quite strictly to a certain type in light of the items stated above. If the number of members who belong to the same type is extremely small, item types are adjusted by relaxing the limitation. In that case, however, it is preferable that the relaxation is intended only to slightly roughly classifying job types in "8. (Occupation)" section. Originally, the number of types are limited to a minimum in the ten items including "8. (Occupation)" item. It is preferable that the companies engaged with the marriage information service business share a membership organization and cooperate with one another in this field, i.e., the field in which the membership organization is shared, by establishing the same goal such as the suppression of the rise of divorce rate in each country around the world, the peacefulness of household, the suppression of a decline in birth rate and the aging society, and the transformation of the present society to a society in which more energetic dreams and hopes spread.

As for the original member file, information on original members is stored for five years. The control means 11 controls the deletion of the information on the original members when five years pass. During this period, if a certain original member applies again for registration, the information on the member can be made effective use of by moving the information to the member file.

As for the proposed solution to the social issues in the social contribution cooperative activities and the input of the proposed solution, a notification to the effect that the solution should not be critical at all but should be a suggestion is constantly displayed in the first parts of the input boxes in order to prevent the solution from becoming critical. It appears that the society since the dawn of history has generally been the society critical about varied targets. However, history tells us that criticism is often accompanied by anger and resentment. On the one hand, the mind of a criticizing person may possibly be devastated. On the other hand, a criticized person tries so hard to extremely improve the things to be criticized that the person may possibly tend to considerably worsen the fields that the others do not pay attention. It appears that the situations have continued all the time. As can be seen, a criticism-based method has been like, for example, a medicine accompanied by a strong side effect. Taking it into account that people are able to understand that the situations have continued within the recorded history, the time seems to come that the selection of a criticism-based method is stopped at an as early stage as possible and the criticism-based method is moved to a cooperation and support-based method in light of the above-stated evil effects and various problems which have occurred recently. As concrete measures of cooperation and support, a method for discovering the structure of the cause of the occurrence of a problem, contriving a plan for changing, and changing to the situations based on the plan is preferable.

According to the present invention, the respective mechanisms are provided from these viewpoints.

In this specification, because of the nature of the specification, the difference between the conventional marriage information service business and the like and the marriage information service business according to the present invention has been unavoidably described. However, it does not necessarily mean that the present invention is critical about the conventional business but the present invention is intended to deal with the change of structure in cooperation with the respective companies engaged with the business.

While defining a goal of making the realization of the happiness of not only the human being but also all other living things eternal, it is preferable that people endeavor to prevent self-complacency based on the constitutions and ordinances of respective countries including the United Nations Charter. From this viewpoint, it is considered to be preferable to contrive a solution while seeing the structure of cause in rational and diversified manners and to display the notification which is expressed in a proposal fashion in this direction, in the first part.

As for the standard of types, since the home is less influenced by the law than the society for its nature, it is difficult to reach a solution to a trouble related to a husband and wife relation which happens to the home. In the circumstances, if the husband and the wife belong to the same type, a deterrence to such a trouble is generated. It is expected that the fact that they try not to bring about a trouble while balance is being kept by this deterrence, becomes practice, leading to rectification. Based on this standard, a total of ten items which are considered to be at least necessary are selected.

In the display of the view of world and sense of value as the initial stage of member information, if a member of a different type is displayed according to the desire of one member, a mark meaning this is displayed near the sentences of the view of world and sense of values, i.e., right beside the member number. If this mark is clicked on, the control means 11 displays the answer to question status of the member by searching the member file.

As for the member information, it is more preferable to be able to input sentences about the view of world and sense of values within about 1,500 characters after the alternative content check questions and before the other information. It is desirable to certainly do so if the present invention is actually worked. It is unnecessary to provide alternative questions about the sentences.

The control means 11 controls each terminal to return to the front page on any site by clicking on a predetermined button when a predetermined processing is finished on the site.

The overall control operations are carried out by the control means 11 even if there are those which are not specifically specified so in the specification.

Each list is controlled to disappear entirely by a predetermined processing when it becomes unnecessary. To adjust the lists after disappearance, they are controlled to avoid giving intervals by advancing reference numbers.

The ID's and passwords are stored together with the correlation with the corresponding respective member numbers in the ID and password file. In addition, the correlations between the member numbers and the corresponding respective ID's and passwords are stored in the history file.

All the sites described so far may have different homepages. Alternatively, the business operation dedicated site may have a different homepage while the other sites may be opened from the front page of the same site.

In the display of the view of world and sense of values, the color of the item of a different type is changed to yet another certain different color when checking the answer status from the different type mark.

In the mechanism of the present invention, a man or a woman is not formally registered as a member until he or she makes "2: Registration". Since the man or woman is given the ID and password from the business operator, the term "member" is sometimes used in a broader sense in the present specification.

The list advancing processing is common to all the parts.

Although not shown in the drawings, a button which enables the screen to directly return to the front page on each site is provided on each screen.

The detailed instructions on the screens as described in the specification are sometimes, unavoidably omitted in the drawings.

The present invention is characterized not by simply using computers but by realizing the mechanisms of avoiding the above-stated risks themselves while using computers. The present invention is also characterized by creating such a mechanism of not only avoiding the risks but also safely introducing the members toward a better direction in every field. The direction and structure of the mechanism are those described so far appropriately in detail.

The advantage of the present invention is as follows. Through the mechanisms, the risk of the discord and divorce of a husband and a wife is considerably suppressed compared with the conventional art. Each member is given a lot of opportunities to be endowed with or enhance a temperament of endeavoring to make the realization of the happiness of not only the human being but also all the other living things eternal without directing toward the improvement of the benefit of a specific group through the mechanism of the present invention.

The present invention provides a method for a marriage information service business using a computer system, characterized by comprising the following steps:

### Brief Description of the Drawings

[Fig. 1] is a block diagram showing the configuration of an embodiment according to the present invention.
[Fig. 2] is a block diagram showing the configuration of a server in the embodiment.
[Figs. 3] is a flow chart showing the operations of the embodiment.
[Figs. 4] is a flow chart showing the operations of the embodiment.
[Figs. 5] is a flow chart showing the operations of the embodiment.
[Figs. 6] is a flow chart showing the operations of the embodiment.
[Figs. 7] is a flow chart showing the operations of the embodiment.
[Fig. 8] is a view for explaining the configuration of a registration application dedicated site front page screen in the embodiment.
[Fig. 9]
[Fig. 10]
[Fig. 11]
[Fig. 12]
[Fig. 13]
[Fig. 14]
[Fig. 15]
[Fig. 16]
[Fig. 17]
[Fig. 18]
[Fig. 19]
[Fig. 20]
[Fig. 21]
[Fig. 22]
[Fig. 23]
[Fig. 24]
[Fig. 25]
[Fig. 26] is a view for explaining combinations of types which can be basically searched as suitable types in the embodiment.

### [Description of Reference Symbols]

10 server
11 control means
12 input control means
13 output control means
14-22 storage means
1011, 1012, 1013, 1014, 1021, 1022, 1031, 1032 ... terminal

## Claims

1. A method for a marriage information service business using a computer system, comprising the steps of:
urging a member, who is in the process of inputting self information, to answer various question items including personality and disposition about himself or herself; and classifying the member according to answers;
urging the member, who is in the process of inputting self information, to input a sense of world and view of values of the member by sentences; and storing the input sentences;
urging the member, who is in the process of inputting self information, to input other information on the member; and storing the input information;
urging a business operator to add an alternative question for urging the member, who is in the process of searching members of the opposite sex, to select an appropriate choice as a summary of the stored sentences, to the stored sentences, and to input the alternative question-added stored sentences; and storing the alternative question-added stored sentences;
reading views of world and senses of values, input as the sentences, of a group of the opposite sex in a class corresponding to the member who is in the process of searching members of the opposite sex, to the member; and outputting the sentences thus read;
urging the member to view the output sentences, and to enter a step of answering the next alternative question if there is a member of the opposite sex with whom the member wants to consider holding a meeting;
reading the alternative question added to the sentences input as the senses of world and views of values; and outputting the alternative question added to the sentences;
urging the member to answer the alternative question;
reading other information on the member of the opposite sex if it is determined that the answer of the member is correct; and outputting the other information thus read;
not reading the other information on the member of the opposite sex for a few minutes on a screen of a personal computer of the member, who is in the process of searching, if it is determined that the answer is incorrect;
urging the member to answer a question as to whether or not the member considers holding the meeting and applies for a material check meeting based on the information so far;
reading various items for checking a material related to the material check meeting, on the screen of the personal computer of each of the male and female members; and outputting the items thus read;
urging each of the male and female members to make an input, which means that an item has been checked, per item while mutually checking;
urging each of the male and female members to answer a question as to whether or not each of the members makes an application for entering a step of cooperating with each other in a social contribution cooperative activity, as the next step, at the end of checking the items; and
urging the male and female members to contrive a solution or the like to a social issue or the like compromised as a theme, to input a content of the solution or the like by sentences or by sentences and drawings, and the method **characterized by** comprising:
means for not displaying the information on the male and female members on a search screen until a relationship between the male and female members ends and the information on the male and female members can be read next to another member if the male and female members compromises holding the material check meeting;
a step of, after procedures for the male and female members, which are not displayed on the search screen, are finished, providing a material check format used during the next material check meeting so as to be able to always start the material check format on the screen of the personal computer for the male and female members; and urging the male and female members to input identification ID's of the members, respectively; and
a step of determining whether or not the members are permitted to input the answers to said question items for member classification, using the respective input identification ID's,
the method **characterized by** comprising:
a step of urging each of the male and female members to input a check of an item whenever the member checks the item one by one, so as to urge the male and female members to surely check contents of mutual materials about the members, respectively, as the material check meeting; and
a step of, if the male and female members check the item indicating that the members agree to enter a next step of a social contribution cooperative activity, providing a space for inputting the content on the screen of the personal computer so that the space can be always prepared with respect to the male and female members, and
the method **characterized by** comprising:
a step of urging the male and female members to contrive a solution or the like to a social issue or the like compromised as a theme, as a social contribution cooperative activity, and inputting a content of the solution or the like;
a step of, if the content of the solution or the like is transmitted to an overseas destination, putting a translation of the content translated by a translation software into a predetermined place so as to put the translation along the content; and
a step of transmitting the content of the solution or the like and the translation to the desired destination over a predetermined e-mail.

2. Marriage information service business as in claim 1, where in a method for providing, the high incorrect answer rate case processing.
